# EUROPEAN PATENT APPLICATION

(11) **EP 1 750 269 A2**
(43) Date of publication of application: **07.02.2007**
(21) Application number: 06076340.6
(22) Date of filing: 30.06.2006
(51) Int. Cl.: G11B 27/32, G11B 27/034

(54) **Reducing genre metadata indicating the type of music**

(30) Priority: 03.08.2005 US 196580
(71) Applicant: Delphi Technologies, Inc., Troy, Michigan 48007 (US)
(72) Inventor: Toms, Mona L., Carmel, IN 46032 (US); Welk, Douglas L., Rossville, IN 46065 (US)
(74) Representative: Denton, Michael John

(57) **Abstract**

A genre set is reduced from a large set of distinct genre classifications to a smaller set of broader genre classifications. The genre set may be reduced using statistical classification techniques, such as, for example, similarity matrices or may be arbitrarily defined *a priori.*

## Description

### TECHNICAL FIELD

The present invention relates generally to entertainment systems. More particularly, the present invention relates to digital audio files used in connection with such entertainment systems.

### BACKGROUND OF THE INVENTION

The vast majority of vehicles currently in use incorporate vehicle entertainment systems for entertaining drivers and passengers during their travels. For example, vehicle audio systems provide information and musical programming to many motorists daily. These audio systems typically include an AM/FM radio receiver that receives radio frequency (RF) signals. These RF signals are then processed and rendered as audio output.

In addition to a radio receiver, vehicle audio systems often incorporate media players for playing prerecorded music. For example, some vehicle audio systems incorporate cassette or compact disc (CD) players. An increasing number of vehicle audio systems also incorporate media players for playing audio files stored in any of a variety of formats, including, for example, the MP3, MP3Pro, WMA, AAC, and Ogg-Vorbis formats. These digitally compressed formats allow storage media, such as CDs, to store many more songs relative to uncompressed formats, such as the CD Audio format. For example, with a compression of 10:1, it is possible to store well over 100 songs on a single CD or thousands of songs on a hard disc drive (HDD), depending on disc capacity.

In addition, the compressed data contains metadata information about the aural component in an ID3 tag. This metadata may include, for example, the song title, artist, album, and genre. Using this metadata provides an easy filter mechanism for the user to select criteria for browsing a song list or library. Metadata can be entered manually by the user or automatically captured through automatic naming software that accesses a data source, such as Gracenote. Gracenote is a CD database metadata lookup service that uses data from Internet users' manual data entries.

One of the advantages of metadata is that media players can provide an extensive library browsing capability using metadata fields such as the artist name, the album name, and the genre. The genre field is particularly useful because it allows the user to filter songs within a song library that fit a particular mood. However, for the genre field to be truly effective, the grouping classification must be meaningful to the user. Currently, the genre lists used by automatic naming software are often too large and fine-grained for the user to differentiate among genres. For example, it may not be clear whether a particular song should be classified as "rock," "soft rock," or "classic rock." Automatic naming software generally supports more than 100 genre types. For example, Gracenote currently supports over 250 genre types. Furthermore, with Gracenote, there can be only one genre defined per audio file. That is, a particular song can be classified under "rock," but not under both "rock" and "soft rock" simultaneously. Because there is no standard for encoding genre metadata, the user can easily become confused when using genre metadata as a way to browse or filter songs for play from a song library. In addition, in the context of in-vehicle applications, scrolling through a list of up to 255 genres can result in excessive head-down time and driver distraction, increasing the risk of accidents.

### SUMMARY OF THE INVENTION

According to various example embodiments of the present invention, a genre set is reduced from a large set of distinct genre classifications to a smaller set of broader genre classifications. The genre set can be reduced using statistical classification techniques, such as, for example, similarity matrices or may be arbitrarily defined *a priori.*

One embodiment of the invention is directed to a method to classify a plurality of audio files. Metadata associated with the audio files is received as input. The metadata comprises a set of original genre entries. The set of original genre entries is correlated with a set of consolidated genre entries. The number of consolidated genre entries is less than the number of original genre entries. The consolidated genre entries are associated with the audio files as a function of the correlation of the set of original genre entries with the set of consolidated genre entries. This method may be embodied in processor-readable media.

In another embodiment, an entertainment subsystem includes a media subsystem configured to retrieve data from a data storage medium storing audio files.
A microprocessor is operatively coupled to the media subsystem and configured to receive as input metadata associated with the audio files, the metadata comprising a set of original genre entries. The microprocessor is also configured to correlate the set of original genre entries with a set of consolidated genre entries, the number of consolidated genre entries being less than the number of original genre entries, and to associate the consolidated genre entries with the audio files as a function of the correlation of the set of original genre entries with the set of consolidated genre entries.

Various embodiments may provide certain advantages. For instance, reducing a genre set to a manageable number of genre classifications may reduce the amount of time that a user spends scrolling through a listing of genre classifications. As a result, driver interaction with the user interface and the resulting potential for driver distraction may be reduced. In addition, locating individual audio files may be facilitated.

Additional objects, advantages, and features of the present invention will become apparent from the following description and the claims that follow, considered in conjunction with the accompanying drawings.

### BRIEF DESCRIPTION OF THE DRAWINGS

Figure 1 is a block diagram illustrating an example vehicle entertainment system according to one embodiment.
Figure 2 is a flow diagram illustrating an example process for classifying audio files according to another embodiment.
Figure 3 illustrates a set of original genre entries.
Figure 4 illustrates a set of consolidated genre entries.
Figure 5 illustrates an example notional similarity matrix.
Figure 6 illustrates an example notional fusion coefficients graph.
Figure 7 illustrates an example partial dendrogram.
Figure 8 illustrates an example graphical user interface (GUI) for use in customizing consolidated genre entries.

### DESCRIPTION OF TH PREFERRED EMBODIMENTS

According to various embodiments, a media system reduces a genre set from a large set of distinct genre classifications to a smaller set of broader genre classifications. The genre set is reduced using statistical classification techniques, such as, for example, similarity matrices. In this way, the amount of time that a user spends scrolling through a listing of genre classifications can be reduced, thereby reducing driver interaction with the user interface and the resulting potential for driver distraction. In addition, locating individual audio files may be facilitated.

The following description of various embodiments implemented in a vehicle-based entertainment system is to be construed by way of illustration rather than limitation. This description is not intended to limit the invention or its applications or uses. For example, while various embodiments are described as being implemented in a vehicle-based media system, it will be appreciated that the principles of the invention are applicable to media systems operable in other environments, such as home media systems.

In the following description, numerous specific details are set forth in order to provide a thorough understanding of various embodiments. It will be apparent to one skilled in the art that some embodiments may be practiced without some or all of these specific details. In other instances, well known components and process steps have not been described in detail.

Various embodiments may be described in the general context of processor-executable instructions, such as program modules, being executed by a processor. Generally, program modules include routines, programs, objects, components, data structures, etc., that perform particular tasks or implement particular abstract data types. The invention may also be practiced in distributed processing environments in which tasks are performed by remote processing devices that are linked through a communications network or other data transmission medium. In a distributed processing environment, program modules and other data may be located in both local and remote storage media, including memory storage devices.

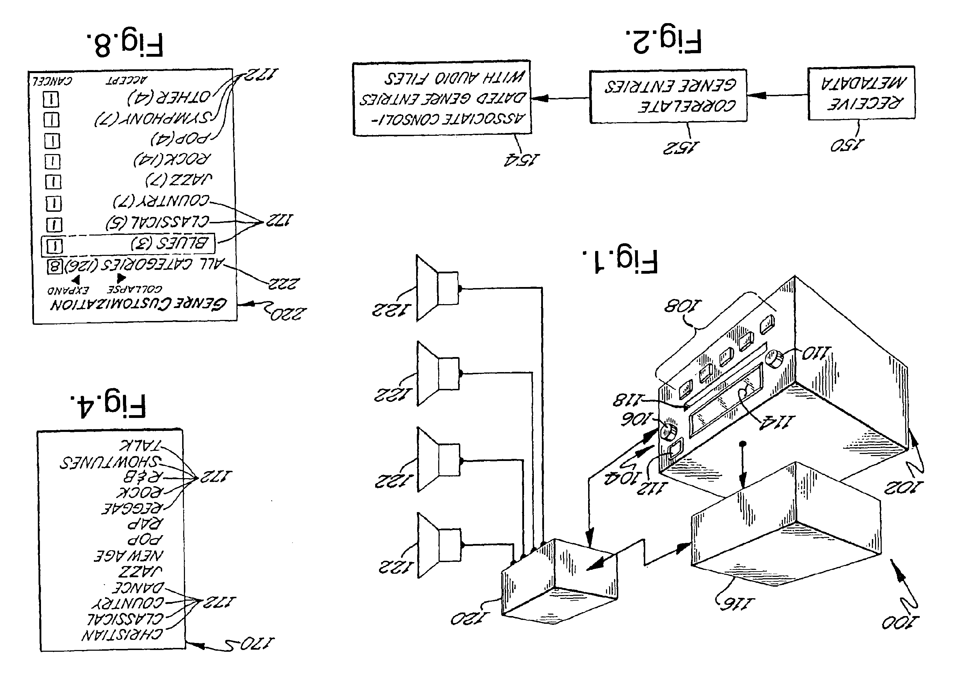

Referring now to the drawings, Figure 1 is a block diagram illustrating an example vehicle entertainment system 100. A head unit 102 is mounted on a dashboard of the vehicle and includes a user interface subsystem 104 through which a driver or passenger can interact with the vehicle entertainment system 100. The user interface subsystem 104 includes a number of controls, such as, for example, a tuner knob 106, radio preset buttons 108, a volume knob 110, and an eject button 112 for ejecting a disc. While not shown in Figure 1, the user interface subsystem 104 may include other controls, such as fade and balance controls, equalizer controls, etc. The user interface subsystem 104 also includes a display 114 for communicating information to the driver or passenger, such as the frequency of a radio station to which the vehicle entertainment system 100 is tuned or information relating to a compact disc (CD) that the vehicle entertainment system 100 is playing.

A media subsystem 116 is configured to read a storage medium, such as a CD, a CD-ROM, a Secure Digital (SD) memory card, a MultiMedia Card (MMC), or hard disk drive (HDD). The media subsystem 116 receives the storage medium, for example, via a receptacle 118 formed in the head unit 102. The storage medium may store data, such as audio files in a variety of formats, including but not limited to the MP3, MP3Pro, WMA, AAC, and Ogg-Vorbis formats. These digitally compressed formats allow storage media, such as CDs, to store many more songs relative to uncompressed formats, such as the CD Audio format. For example, with a compression of 10:1, it is possible to store well over 100 songs on a single CD or thousands of songs on a hard disk drive (HDD), depending on disc capacity.

When a storage medium is inserted into the media subsystem 116, for example, through a receptacle 118 in the head unit 102, the media subsystem 116 reads data from the storage medium and communicates the data to a microprocessor 120, typically via a buffer (not shown). The data is then provided to one or more additional components, including, but not limited to, a digital signal processor (DSP) and a digital-to-analog converter (DAC), which convert the digital data signal to an analog signal. Speakers 122 then generate sound in response to the analog signal.

The microprocessor 120 is typically configured to operate with one or more types of processor readable media. Processor readable media can be any available media that can be accessed by the microprocessor 120 and includes both volatile and nonvolatile media, removable and non-removable media. By way of example, and not limitation, processor readable media may include storage media and communication media. Storage media includes both volatile and nonvolatile, removable and nonremovable media implemented in any method or technology for storage of information such as processor-readable instructions, data structures, program modules, or other data. Storage media includes, but is not limited to, RAM, ROM, EEPROM, flash memory or other memory technology, CD-ROM, digital versatile discs (DVDs) or other optical disc storage, magnetic cassettes, magnetic tape, magnetic disk storage or other magnetic storage devices, or any other medium that can be used to store the desired information and that can be accessed by the microprocessor 120. Communication media typically embodies processor-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also intended to be included within the scope of processor-readable media.

Certain storage media can store hundreds or thousands of audio files. As disclosed above, the audio files may be stored in any of a variety of formats, including but not limited to the MP3, MP3Pro, WMA, AAC, and Ogg-Vorbis formats. These audio files may be associated with one or more metadata fields that store information relating to the audio files. Metadata facilitates sorting and filtering audio files, particularly large numbers of audio files. The metadata fields may include, for example, artist name, track title, and album title fields.

Another example of a metadata field that is useful for classifying audio files is a genre field. The genre field stores genre information associated with the audio files, such as whether a particular audio file encodes a classic rock song, a country song, etc. As described above, however, the genre lists used by automatic naming software are often too large and fine-grained for the user to differentiate among genres. For example, it may not be clear whether a particular song, such as Eric Clapton's "Layla," should be classified as "rock," "soft rock," or "classic rock." Automatic naming software generally supports more than 100 genre types. For example, Gracenote currently supports over 250 genre types. Futhermore, with Gracenote, there can be only one genre defined per audio file. That is, a particular song can be classified under "rock," but not under both "rock" and "soft rock" simultaneously. Because there is no standard for encoding genre metadata, the user can easily become confused when using genre metadata as a way to browse or filter songs for play from a song library. In addition, in the context of in-vehicle applications, scrolling through a list of up to 255 genres can result in excessive head-down time and driver distraction, increasing the risk of accidents.

According to various embodiments, the vehicle entertainment system 100 employs a customizable, reduced genre set that is reclassified from the original genre metadata. Thus, for example, while the original genre metadata may represent 100 or more distinct genre labels, the reduced genre set represents a significantly smaller number, e.g., fewer than 20. By employing the reduced genre set, the vehicle entertainment system 100 may reduce the amount of time that a user spends scrolling through a listing of genre classifications. As a result, driver interaction with the user interface and the resulting potential for driver distraction may be reduced. In addition, locating individual audio files may be facilitated.

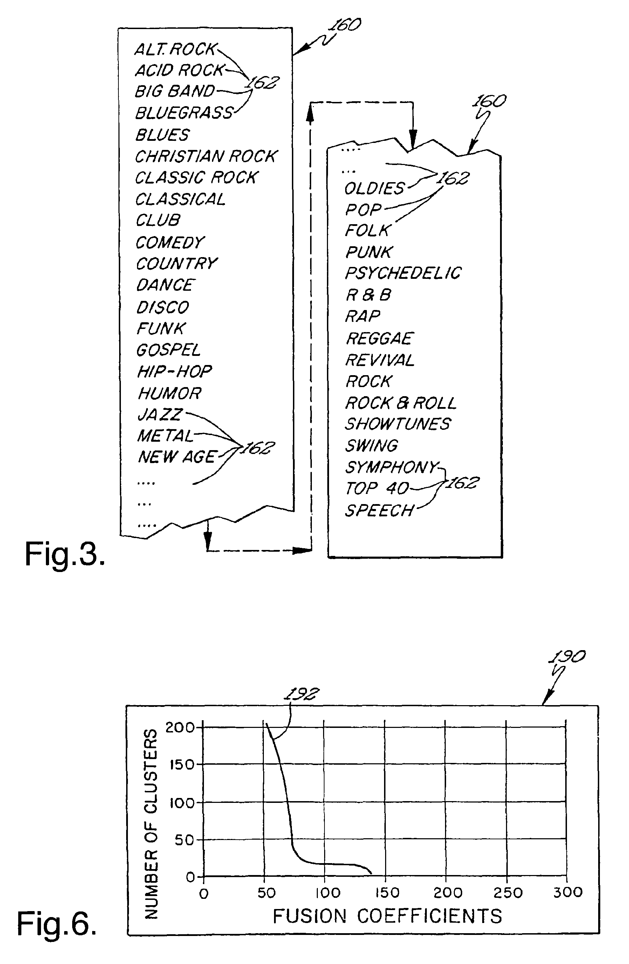

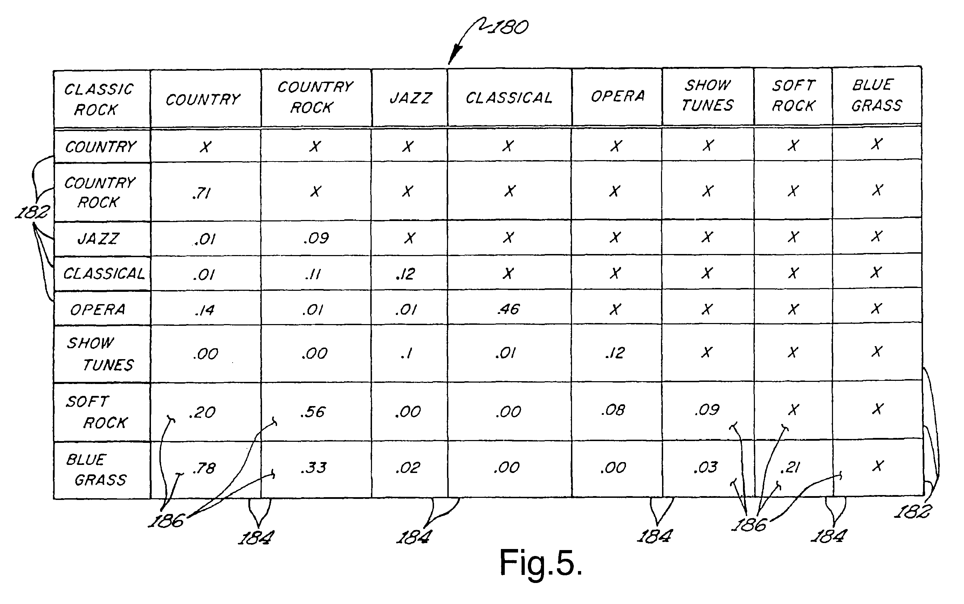

The vehicle entertainment system 100 reclassifies audio files using the reduced genre set by, for example, employing similarity matrix correlations or statistical classification techniques. Figure 2 is a flow diagram illustrating one example process for reclassifying audio files according to one embodiment. The vehicle entertainment system 100 receives the metadata associated with the audio files (150). The metadata is typically stored on the same storage medium as the audio files themselves. The metadata for each audio file includes a genre field that stores, for example, a genre entry selected from a set of original genre entries. Figure 3 depicts an example set 160 of original genre entries 162. After the vehicle entertainment system 100 receives the metadata, the microprocessor 120 correlates the original genre entries 162 with a set of consolidated genre entries (152). The set of consolidated genre entries contains fewer entries than the set of original genre entries 162. Figure 4 depicts an example set 170 of consolidated genre entries 172. This correlation process can be performed using any of a variety of techniques as described below. The microprocessor 120 then associates each audio file with a consolidated genre entry (154) based on the results of correlating the original genre entries 162 and the consolidated entries 172.

The original genre entries 162 can be correlated with the consolidated genre entries 172 in a number of ways. Figure 5, for example, illustrates an example notional similarity matrix 180 that can be employed in correlating the original genre entries 162 with the consolidated genre entries 172. The similarity matrix 180 is formed by a number of rows 182 and columns 184 of cells 186. Original genre entries 162 appear at the top row and left-most column of the similarity matrix 180. The cells 186 store values that represent the degree of correlation between the original genre entries 162 represented by the row 182 and column 184 in which the cells 186 appear. Certain cells 186 do not store values because they appear at the intersection of a row 182 and a column 184 that represent the same original genre entry 162. Certain other cells 186 do not store values because they appear at the intersection of a row 182 and a column 184 that represent a pair of original genre entries 162 for which a value is stored in another cell 186.

Using the similarity matrix 180, genre reduction and reclassification is based on a set of correlation criteria. For example, the example similarity matrix 180 of Figure 5 shows that the original genre entries 162 denoted "country rock" and "soft rock" are relatively strongly correlated, with a correlation coefficient of 0.56. Accordingly, the original genre entries "country rock" and "soft rock" may be reclassified under a single consolidated genre entry 172. The original genre entries 162 denoted "country rock" and "country" are also strongly correlated, with a correlation coefficient of 0.71; these original genre entries would also be reclassified under a single consolidated genre entry 172, which may not be the same consolidated genre entry 172 under which the original genre entries "country rock" and "soft rock" are reclassified. For example, because the original genre entries "country" and "soft rock" are not as strongly correlated, these two original genre entries would not be reclassified under the same consolidated genre entry 172. Rather, the original genre entry "country rock" can be reclassified under one consolidated genre entry 172 denoted "rock" and another consolidated genre entry 172 denoted "country," based on established criteria.

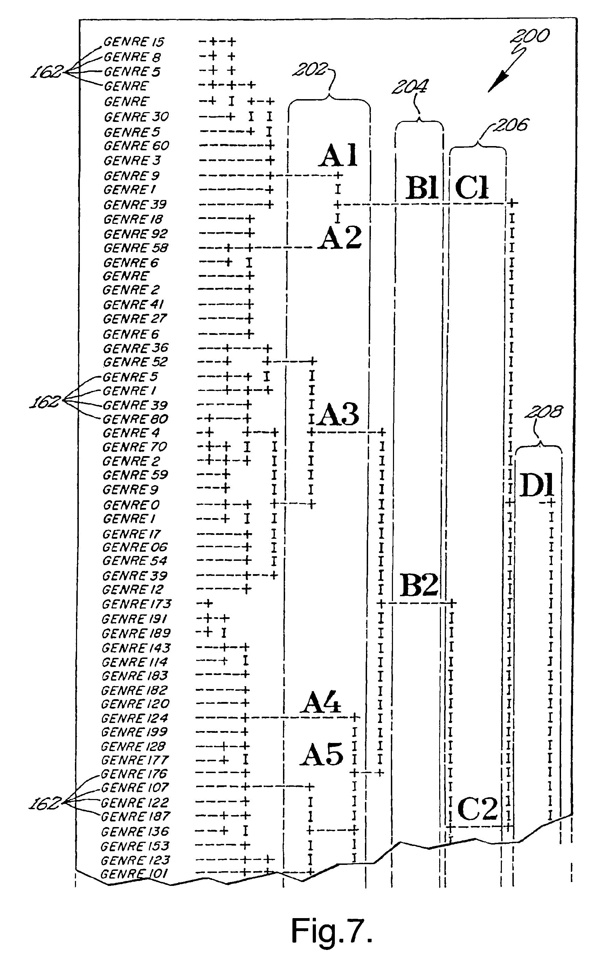

Another way to correlate the original genre entries 162 with the consolidated genre entries 172 involves a cluster analysis. Figure 6 depicts an example fusion coefficient graph 190 that may be used in the cluster analysis. The fusion coefficient graph 190 plots the number of clusters, which represent consolidated genre entries 172, on a vertical axis. The number of fusion coefficients corresponding to each number of clusters is plotted on a horizontal axis. With cluster analysis, the flattening of a curve 192 on the fusion coefficient graph 190 is used to identify an optimal number of genre categories, that is, an optimal number of consolidated genre entries 172, and provide a preliminary set of consolidated genre entries 172 as a baseline for groupings of original genre entries 162 under these consolidated genre entries 172. Fusion coefficients provide a measure of the relative distance of items, i.e., genre metadata, being joined in the clustering process. In the example fusion coefficient graph 190 shown in Figure 6, the optimal number of consolidated genre entries 172 is approximately 18-20, where the curve 192 flattens.

A hierarchical tree dendrogram may be used to depict various levels of cluster solutions, which correspond to candidate sets of consolidated genre entries 172. Figure 7 depicts a partial dendrogram 200 that shows four such cluster solutions. The original genre entries 162 appear at the left-hand side of the partial dendrogram 200. The cluster solutions are represented by hierarchical levels of the dendrogram 200. For example, a relatively highly granular cluster solution 202 is denoted by alphanumeric designations consisting of the letter "A" followed by a number. This particular cluster solution 202 contains a relatively large number of consolidated genre entries 172, of which nine are shown in Figure 7. Even this cluster solution, however, contains fewer genre entries than are present in the set of original genre entries 162. A somewhat less granular cluster solution 204 is denoted by alphanumeric designations consisting of the letter "B" followed by a number. The cluster solution 204 contains fewer consolidated genre entries 172 than the cluster solution 202. An even less granular cluster solution 206 is denoted by alphanumeric designations consisting of the letter "C" followed by a number, and a still less granular cluster solution 208 is denoted by alphanumeric designations consisting of the letter "D" followed by a number. The cluster solutions 202, 204, 206, and 208, then, represent different levels of granularity. Because the fusion coefficient graph 190 of Figure 6 shows that the optimal number of consolidated genre entries 172 is approximately 18-20, the microprocessor 120 may select the cluster solution containing the number of consolidated genre entries 172 most closely approximating the optimal range of 18-20 consolidated genre entries as a preliminary cluster solution.
Alternatively, all four cluster solutions 202, 204, 206, and 208 may be presented in look-up tables to accommodate individual customization.

For customized genre groupings, the user can select specific categories that can either be expanded into subcategories or collapsed into fewer categories. The user can also globally collapse or expand a genre set from an optimal number of categories, e.g., 18-20 in the example shown in Figures 6 and 7, to the next best category solution with fewer or more categories, *i.e.,* consolidated genre entries 172. For example, if the microprocessor 120 determines that the cluster solution 204 of Figure 7 contains the number of consolidated genre entries 172 most closely approximating the optimal range of 18-20, the cluster solution 204 may be used as the baseline for groupings of original genre entries 162 under respective consolidated genre entries 172. If the user desires, he or she can collapse or expand genre sets from one level of granularity to another level of either greater or lesser granularity, either with respect to selected categories, or with respect to the cluster solution as a whole, e.g., from cluster solution 204 to cluster solution 202, 206, or 208.

Figure 8 shows an example graphical user interface (GUI) 220 for use in customizing the consolidated genre entries 172 in this way. The GUI 220 initially displays the cluster solution that was identified in the cluster analysis as having the optimal number of categories. The cluster solution is displayed using a hierarchical view, with consolidated genre entries 172 appearing under a heading 222. After each consolidated genre entry 172, a number in brackets denotes the number of original genre entries 162 currently classified under the respective consolidated genre entry 172. Each consolidated genre entry 172 can be expanded to a higher level of granularity, thereby increasing the number of consolidated genre entries 172, or collapsed to a lower level of granularity, thereby decreasing the number of consolidated genre entries 172. Alternatively, the entire cluster solution can be expanded to a higher level of granularity or collapsed to a lower level of granularity. In this way, the user can customize the set of consolidated genre entries 172. Labels for newly-formed genre categories can either be automatically assigned using an algorithm that uses the most frequent word occurrences (e.g., rock) of the original genre metadata, or via manual alphanumeric or voice name tag input. A category label "Other" may be used for groupings having few entries.

As demonstrated by the foregoing discussion, various embodiments may provide certain advantages, particularly in the context of vehicle entertainment systems in which the potential for driver distraction should be reduced. The vehicle entertainment system reduces the genre set to a manageable number of genre classifications, thereby reducing the amount of time that a user spends scrolling through a listing of genre classifications. As a result, driver interaction with the user interface and the resulting potential for driver distraction may be reduced. In addition, locating individual audio files may be facilitated.

It will be understood by those who practice the invention and those skilled in the art that various modifications and improvements may be made to the invention without departing from the spirit and scope of the disclosed embodiments. The scope of protection afforded is to be determined solely by the claims and by the breadth of interpretation allowed by law.

## Claims

1. A method to classify a plurality of audio files, the method comprising the steps of:
receiving as input metadata associated with the audio files, the metadata comprising a set of original genre entries (162);
correlating the set of original genre entries (162) with a set of consolidated genre entries (172), the number of consolidated genre entries (172) being less than the number of original genre entries (162); and
associating the consolidated genre entries (172) with the audio files as a function of the correlation of the set of original genre entries (162) with the set of consolidated genre entries (172).

2. The method of claim 1, wherein the step of correlating the set of original genre entries (162) with the set of consolidated genre entries (172) comprises the step of correlating the set of original genre entries (162) with the set of consolidated genre entries (172) using a similarity matrix (180).

3. The method of claim 1, wherein the step of correlating the set of original genre entries (162) with the set of consolidated genre entries (172) comprises the step of correlating the set of original genre entries (162) with the set of consolidated genre entries (172) using a statistical classification technique.

4. The method of claim 3, wherein the statistical classification technique comprises cluster analysis.

5. The method of claim 4, further comprising the steps of:
identifying a plurality of cluster solutions (202, 204, 206, 208) as a function of the cluster analysis, each cluster solution (202, 204, 206, 208) comprising a candidate set of consolidated genre entries (172); and
identifying one of the cluster solutions (202, 204, 206, 208) as a preliminary cluster solution.

6. The method of claim 4, further comprising the step of generating a preliminary association of consolidated genre entries (172) with respective original genre entries (162) as a function of the cluster analysis.

7. The method of claim 4, further comprising the steps of:
receiving a user selection of at least one consolidated genre entry (172) of the candidate set of consolidated genre entries; and
changing a level of granularity of the at least one selected consolidated genre entry (172).

8. A processor-readable medium having processor-executable instructions for:
receiving as input metadata associated with a plurality of audio files, the metadata comprising a set of original genre entries (162);
correlating the set of original genre entries (162) with a set of consolidated genre entries (172), the number of consolidated genre entries (172) being less than the number of original genre entries (162); and
associating the consolidated genre entries (172) with the audio files as a function of the correlation of the set of original genre entries (162) with the set of consolidated genre entries (172).

9. The processor-readable medium of claim 8, further having processor-executable instructions for correlating the set of original genre entries (162) with the set of consolidated genre entries (172) using a similarity matrix (180).

10. The processor-readable medium of claim 8, further having processor-executable instructions for correlating the set of original genre entries (162) with the set of consolidated genre entries (172) using a statistical classification technique.

11. The processor-readable medium of claim 10, wherein the statistical classification technique comprises cluster analysis.

12. The processor-readable medium of claim 11, further having processor-executable instructions for:
identifying a plurality of cluster solutions (202, 204, 206, 208) as a function of the cluster analysis, each cluster solution (202, 204, 206, 208) comprising a candidate set of consolidated genre entries (172); and
identifying one of the cluster solutions (202, 204, 206, 208) as a preliminary cluster solution.

13. The processor-readable medium of claim 11, further having processor-executable instructions for generating a preliminary association of consolidated genre entries (172) with respective original genre entries (162) as a function of the cluster analysis.

14. The processor-readable medium of claim 11, further having processor-executable instructions for:
receiving a user selection of at least one consolidated genre entry (172) of the candidate set of consolidated genre entries; and
changing a level of granularity of the at least one selected consolidated genre entry (172).

15. An entertainment system (100) of the type comprising a media subsystem (116) configured to retrieve data from a data storage medium storing a plurality of audio files, **characterised by** a microprocessor (120) operatively coupled to the media subsystem and configured to:
receive as input metadata associated with the audio files, the metadata comprising a set of original genre entries (162);
correlate the set of original genre entries (162) with a set of consolidated genre entries (172), the number of consolidated genre entries (172) being less than the number of original genre entries (162); and
associate the consolidated genre entries (172) with the audio files as a function of the correlation of the set of original genre entries (162) with the set of consolidated genre entries (172).

16. The entertainment system of claim 15, wherein the microprocessor (120) is further configured to correlate the set of original genre entries (162) with the set of consolidated genre entries (172) using a similarity matrix (180).

17. The entertainment system of claim 15, wherein the microprocessor (120) is further configured to correlate the set of original genre entries (162) with the set of consolidated genre entries (172) using a statistical classification technique.

18. The entertainment system of claim 17, wherein the statistical classification technique comprises cluster analysis.

19. The entertainment system of claim 18, wherein the microprocessor (120) is further configured to:
identify a plurality of cluster solutions (202, 204, 206, 208) as a function of the cluster analysis, each cluster solution (202, 204, 206, 208) comprising a candidate set of consolidated genre entries (172); and
identify one of the cluster solutions (202, 204, 206, 208) as a preliminary cluster solution.

20. The entertainment system of claim 18, wherein the microprocessor (120) is further configured to generate a preliminary association of consolidated genre entries (172) with respective original genre entries (162) as a function of the cluster analysis.

21. The entertainment system of claim 18, wherein the microprocessor (120) is further configured to:
receive a user selection of at least one consolidated genre entry (172) of the candidate set of consolidated genre entries; and
change a level of granularity of the at least one selected consolidated genre entry (172).
